# EUROPEAN PATENT SPECIFICATION

(11) **EP 2 524 269 B1**
(45) Date of publication and mention of the grant of the patent: **30.08.2017**
(21) Application number: 10842779.0
(22) Date of filing: 21.12.2010
(51) Int. Cl.: G08G 1/00, H04L 29/06

(54) **A SYSTEM AND METHOD OF DATA SHARING**
SYSTEM UND VERFAHREN ZUR GEMEINSAMEN DATENNUTZUNG
SYSTÈME ET PROCÉDÉ DE PARTAGE DE DONNÉES

(30) Priority: 15.01.2010 AU 2010900171
(43) Date of publication of application: 21.11.2012
(73) Proprietor: Leica Geosystems AG, 9435 Heerbrugg (CH)
(72) Inventor: ROBERTS, Peter James, Springfield Lakes Queensland 4300 (AU); BAILEY, Peter Andrew, Swan View Western Australia 6056 (AU)
(74) Representative: Kaminski Harmann
(86) International application number: PCT/AU2010/001728
(87) International publication number: WO 2011/085430

(56) References cited:
- US-A- 6 064 926
- US-A1- 2006 187 027
- US-A1- 2008 288 162

## Description

### FIELD OF THE INVENTION

The present invention relates to a data sharing system and a method of data sharing. In particular, although not exclusively, the present invention relates to a system and method of data sharing between guidance devices mounted to roving agricultural vehicles.

### BACKGROUND TO THE INVENTION

Off-road vehicles typically utilised in, for example, agricultural, construction, mining and forestry applications, such as tractors, harvesters, diggers, graders, dump trucks and other powered vehicles, commonly include electronic equipment designed to assist an operator in guiding the vehicle along a particular path.

In particular, agricultural vehicles, such as tractors, harvesters and the like, often include a guidance device that includes a Global Navigation Satellite System (GNSS) unit and display to guide the vehicle along a predetermined path using positional data provided by the GNSS constellation of satellites as an aide.

Moreover, it is known to use guidance devices that include GNSS units on agricultural vehicles such that a course may be stored within the guidance device and the guidance device operates the vehicle in a semi-autonomous manner. Alternatively, the guidance device provides direction to an operator of the agricultural vehicle to enable the operator to maintain a predetermined fixed path when, for example, harvesting crops or spraying a paddock utilising the vehicle.

These guidance devices may further be operable to automatically control equipment such as sprayers or seeders to not spray or seed on predefined exclusion zones, or zones where the vehicle overlaps its previous path.

It is often desirable to have more than one vehicle operate in the same paddock, or have different vehicles operate in the same paddock at different times.

Document US-2006/187027 discloses methods and systems for electronically tracking the progress of teams.

### SUMMARY OF THE INVENTION

In one form, although it need not be the broadest form, the invention resides in a system for data sharing between guidance devices mounted to roving agricultural vehicles, the system comprising:
a central server having:
   a communications module for receiving upload guidance data and for transmitting download guidance data; and
   a database for storing the upload guidance data;
a first guidance device of a first agricultural vehicle, the first guidance device having a communication module for wireless transmission of upload guidance data to the central server, the first guidance data including coverage data of area covered by the first agricultural vehicle while operating; and
a second guidance device of a second agricultural vehicle, the second guidance device having a communication module for wireless receipt of download guidance data from the central server;
wherein the central server is configured so that at least part of the download guidance data transmitted to the second guidance device comprises data generated by the server using at least part of the upload guidance data received from the first guidance device stored in the database of the central server.

Preferably, the communications modules of the first and second guidance devices may be configured to both transmit upload guidance data and receive download guidance data.

Preferably, the communication module of each of the guidance devices includes a wireless modem. In particular, the wireless modem may be a cellular modem.

Preferably, the first and second guidance devices each include a positioning module. The positioning modules are configured to track the position of a particular guidance device to generate position data used in generating the coverage data. The positioning module is preferably in the form of a GNSS unit.

Preferably, the first and second guidance devices each include a mapping and display module for recording coverage data of area covered by the vehicle while operating.

In another form, the invention resides in the central server which provides data sharing between guidance devices mounted to roving agricultural vehicles, the central server having:
a communications module connected to a wireless communications network for receiving upload guidance data from a first guidance device of a first agricultural vehicle and for transmitting download guidance data to a second guidance device of a second agricultural vehicle via the wireless communications network;
a database for storing the upload guidance data; and
wherein the central server is configured so that at least part of the download guidance data transmitted to the second guidance device comprises data generated by the central server using at least part of the upload guidance data received from the first guidance device stored in the database of the central server.

In still another form, the invention resides in guidance device mountable to an agricultural vehicle, the guidance device including:
a positioning module, the positioning module configured to track the position of the agricultural vehicle;
   a vehicle modeling unit operable to model the footprint of the agricultural vehicle while operating;
   a mapping and display module, the mapping and display module operable to record coverage data of area covered by the agricultural vehicle while operating, and to store the coverage data of other agricultural vehicles;
   a communication module adapted for wireless transmission of upload guidance data, including coverage data of area covered by the agricultural vehicle while operating, to a central server remote from the agricultural vehicle, the communication module adapted to receive download guidance data, including the coverage data of the other agricultural vehicles, from the central server.

In accordance with yet another form, the invention resides in a method of sharing guidance data between roving agricultural vehicles, the method including:
wirelessly transmitting upload guidance data from a first guidance device of first agricultural vehicle to a central server, the upload guidance data including coverage data of area covered by a first agricultural vehicle while operating;
receiving the upload guidance data at the central server;
generating download guidance data at the central server using at least part of the upload guidance data received from the first guidance device;
wirelessly transmitting the download guidance data from the server to a second guidance device of a second agricultural vehicle; and
wirelessly receiving the download guidance data at the second guidance device.

The invention extends to a method of guiding agricultural vehicles to prevent overlap of areas operated on by the roving agricultural vehicles, the method including:
sharing guidance data between roving agricultural vehicles as defined and described hereinabove; and
guiding the second agricultural vehicle using the download guidance data to not overlap while operating with area covered by the first agricultural vehicle while operating. Guiding the second agricultural vehicle includes controlling working equipment of the agricultural vehicle to not operate over area already covered by first agricultural vehicle when the working equipment travels over the area already covered by the first agricultural vehicle.

### BRIEF DESCRIPTION OF THE DRAWINGS

By way of example only, preferred embodiments of the invention will be described more fully hereinafter with reference to the accompanying drawings, wherein:
FIG 1 shows a schematic diagram of a system of data sharing according to an embodiment of the invention;
FIG 2 shows a schematic diagram of a guidance device of the system of FIG 1;
FIG 3 shows a schematic flow diagram of a method of data sharing according to further embodiments of the invention;
FIG 4 shows a schematic top plan view of agricultural vehicles using the system of data sharing of FIG 1; and
FIG 5 shows a schematic top plan view of another example, of agricultural vehicles using the system of data sharing of FIG 1.

### DETAILED DESCRIPTION OF THE INVENTION

The invention will be described in the context of data sharing between guidance devices mounted in roving agricultural vehicles via a remote server. Data is shared between the guidance devices to prevent unnecessary overlap between areas in a paddock operated on by each vehicle. A skilled person will appreciate that the method and system of the invention may be similarly applied to data sharing of guidance devices mounted in non-agricultural vehicles.

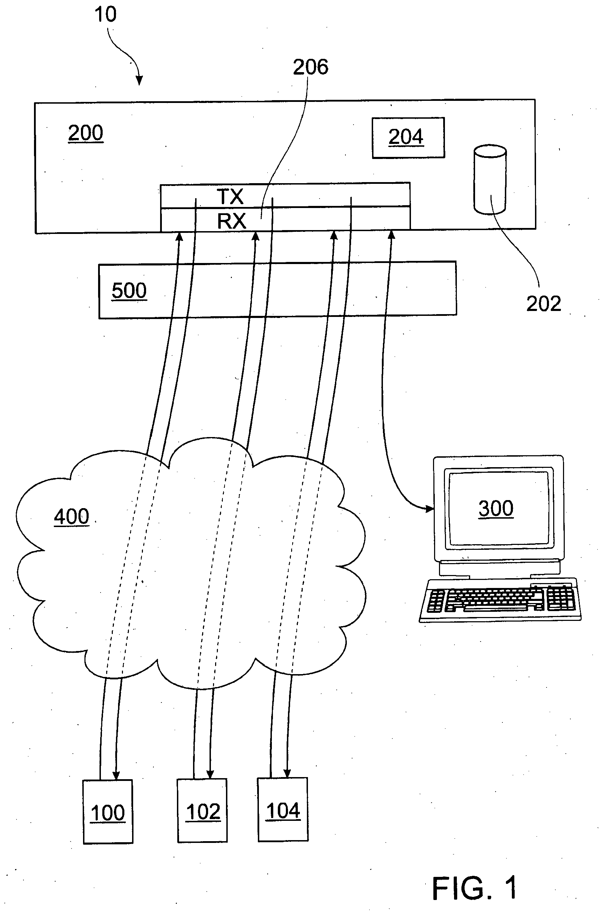

FIG 1 shows a schematic view of a system 10 of data sharing according to an embodiment of the invention. The system 10 includes a first guidance device 100, a second guidance device 102, a third guidance device 104, a central server 200, a personal computer 300, a wireless communications network 400 and a fixed line telecommunications network 500. It must be appreciated that although only three guidance devices 100, 102, 104 are described and shown in FIG 1, the system 10 may include more guidance devices.

Wireless communications network 400 is preferably a cellular network which may be any of a GSM (Global System for Mobile Communications), GPRS (General Packet Radio Service), CDMA (Code Division Multiple Access), or EDGE (Enhanced Data for Global Evolution) network or the like. A skilled person will appreciate that network 400 may be in the form of any wireless communications network.

Fixed line telecommunications network 500 is preferably in the form of the internet. A skilled person will appreciate that network 500 may be in the form of any telecommunications network including any LAN (Local Area Network), or WAN (Wide Area Network).

Each guidance device 100, 102, 104 is mounted to a respective vehicle, such as a tractor or the like.

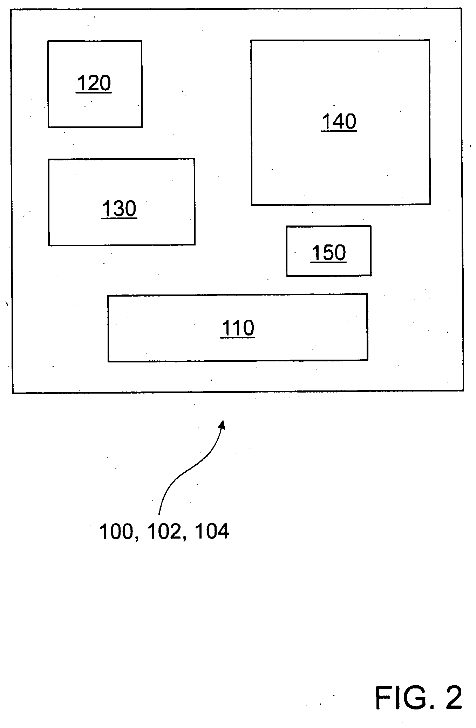

The guidance devices 100, 102 and 104 are the same and are described with reference to FIG. 2. The guidance devices 100, 102 and 104 comprise a processor 120 for controlling the components, discussed below, of the guidance devices 100, 102, 104. The processor 120 has a guidance device identifier stored therein to uniquely identify each guidance device 100, 102, 104. Guidance devices 100, 102, 104 further comprise a positioning module 130 coupled to the processor 120. The positioning module 130 is preferably in the form of a GNSS unit such as Global Positioning System unit (GPS unit) or other known positioning units able to obtain positioning data.

Guidance devices 100, 102, 104 further comprise a mapping and display module 140 operatively coupled to the processor 120 and the positioning module 130. The mapping and display module 140 provides a user of the guidance devices 100, 102, 104 with positional data received from the positioning module 130, real time mapping of where a vehicle has operated, and records coverage data of where the vehicle has operated. The coverage data is generated from the positional data the mapping and display module 140 receives from the positioning module 130.

Each guidance device 100, 102, 104 of the system 10 also comprises a communication module 110 coupled to processor 120 and able to communicate with the central server 200 via networks 400 and 500. Suitably, communication module 110 is in the form of a cellular network module having a cellular modem able to communicate with wireless communications network 400 utilizing GSM, GPRS, CDMA, or EDGE communication systems or the like.

The communication module 110 preferably includes a unique identifier in the form of a network address to uniquely identify the communication module 110 of each guidance device 100, 102, 104 when communication module 110 is in communication with wireless communications network 400. Preferably, the network address may be in the form of a subscriber identity module (SIM) card or may be an IP address assigned to the communication module 110 when the communication module 110 initiates wireless communication with network 400. Each guidance device 100, 102, 104 can be uniquely identified at the sever 200 by its network address.

The modules 110, 130, 140 of the guidance devices 100, 102, 104 may be separate units or may be integrated into single guidance device unit. Where the modules 110, 130, 140 are separate units from each other they are operatively linked by data cables.

Referring back to FIG 1, the central server 200 comprises a database 202, a processor 204 and a communications module 206. The central server 200 is configured to receive data from the guidance devices 100, 102, 104 and transmit data to the guidance devices 100, 102, 104.

Referring to both FIG's 1 and 2, the system 10 provides for guidance data to be shared between the guidance devices 100, 102 and 104 as described hereinbelow.

The first guidance device 100 is operable to transmit upload guidance data to the central server 200 via the wireless communications network 400. The first guidance device 100 is mounted in a first vehicle. It will be appreciated by those skilled in the art that the first guidance device may be part of the electronic equipment of the first vehicle. The upload guidance data comprises at least coverage data of area covered by the first vehicle while operating. The coverage data is data recorded by the mapping and display module 140 of area covered by the first vehicle. The first vehicle is typically harvesting crops, planting or spraying a paddock. The mapping and display module 140 is configured to determine the footprint of the vehicle as it travels along guidance paths by taking into account the width of a boom of the vehicle or other working implement of the vehicle. As such, the guidance devices 100, 102, 104 include a vehicle modeling unit 150 which models the vehicle to allow accurate footprint calculation by the mapping and display module 140. The coverage data describes the area harvested, planted, sprayed, treated or alike by the vehicle in a specific paddock.

The upload guidance data may further include path parameters, geographical position data of the first guidance device 100, and other informational data such as data on fuel levels or product levels of the first vehicle. In certain instances the upload guidance data may comprise the informational data only and temporarily not include coverage data.

More than one vehicle may operate in the same paddock, or different vehicles may operate in the same paddock at different times. It is important that area covered by one vehicle is not overlapped by another vehicle. It is thus necessary for the coverage data of the first vehicle to be shared in real or near real time with other vehicles which may operate in the same paddock. The coverage data of one vehicle serves as guidance to another vehicle operating in the same paddock.

The upload guidance data from the first guidance device 100 is stored in the database 202 of the central server 200. The upload guidance data is processed by the processor 204 to generate download guidance data to be downloaded to the second and third guidance devices 102, 104. The download guidance data is generated using at least part of the upload guidance data from the first guidance device 100. The second and third guidance devices 102, 104 thus receive download guidance data of where the first vehicle has operated. The download guidance data is utilized by the mapping and display modules 140 of second and third guidance devices 102, 104 to guide respective second and third vehicles to not overlap with area in the paddock already covered by the first vehicle.

Although only the transmission of upload data from the first guidance device 100 is described, it must be appreciated that all of the guidance devices 100, 102, 104 may transmit upload guidance data to the central server 200 and the central server 200 may generate download guidance data for all the guidance devices 100, 102, 104. For example, download guidance data for the first guidance device 100 will be generated using upload guidance data from both the second guidance device 102 and the third guidance device 104. Similarly, download guidance data for the second guidance device 102 will be generated using upload guidance data from both the first guidance device 100 and the third guidance device 104.

The personal computer 300 is connected to the central server 200 via the fixed line telecommunications network 500. The computer 300 may also be connected to the fixed line telecommunications network 500 via the wireless communications network 400, as are the guidance devices 100, 102, 104. The personal computer 300 is operable to interface with the central server 200 to view and manage guidance of the vehicles in which the guidance devices 100, 102, 104 are mounted. The personal computer 300 can access the upload guidance data stored in the database 202 of the central server 200. The server 200 may be operable to store a digital site map updated by the upload guidance data from the guidance devices 100, 102, 104. The site map is stored in the database 202 of the central server 200. The central server 200 is adapted to update the digital site map with coverage data received from the guidance devices 100, 102, 104. The digital site map is accessible by the personal computer over the telecommunications network. The position data of the respective guidance devices 100, 102, 104 (and hence the position of the agricultural vehicles) are recorded in the digital site model so as to be viewable via the personal computer 300.

The personal computer 300 is able to send instructions to the guidance devices 100, 102, 104 via the download guidance data from the central server. 200. These instructions may include changes to maps and exclusion zones for the paddocks the vehicles will be operating in. The instructions may further be as basic as messages to be displayed to an operator via the mapping and display module 140.

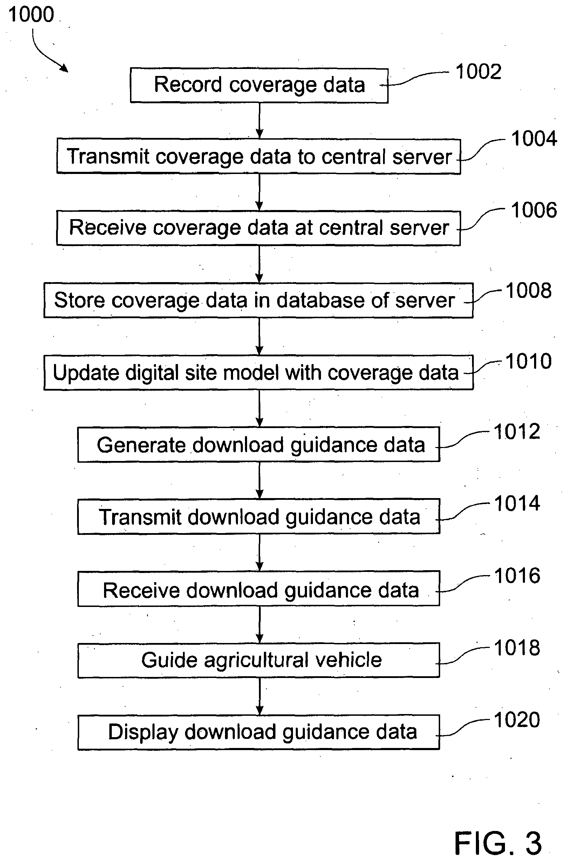

FIG 3 shows a method 1000 of data sharing according to a further embodiment of the invention. The method starts at step 1002 with the first guidance device 100 recording coverage data of area covered by the first vehicle while operating. Recording the coverage data includes calculating the coverage data using the footprint of the first vehicle and the change in position data of the first vehicle.

The coverage data is then transmitted to the central server 200 via the wireless communications network 400 as upload guidance data, as indicated by step 1004.

The central server 200 receives the coverage data transmitted by the first guidance device at step 1006.

The coverage data received at the server is stored in the database 202 of the server as indicated by step 1008.

A digital site model of the paddock or field in which the first vehicle operates is updated in the database 202 by the coverage data at step 1010.

At step 1012 the central server 200 generates download guidance data from the upload guidance data received. The download guidance data includes coverage data of the area on which the first vehicle has operated.

The download guidance data is wirelessly transmitted to the second and third guidance devices 102, 104 via the wireless communications network 400 as indicated by step 1014.

The second and third guidance devices receive the download guidance data at step 1016.

At step 1018 the second and third guidance devices 102, 104 use the download guidance data to guide the vehicles to prevent unnecessary overlap. Specifically, the mapping and display module 140 utilizes the download guidance data to guide respective vehicles to not overlap with area in the paddock already covered by the first vehicle.

The guidance devices 102, 104 display the download guidance data received by the guidance devices 102, 104 to provide an visual indication for avoiding overlap of treated areas.

Area already covered by a vehicle is the area on which the vehicle has operated by spraying, harvesting, seeding or the like the area, and is not merely area where the vehicle has travelled. The mapping and display module 140 is operable to record the area covered and may be linked to switches or sensors of the vehicle to automatically determine whether the vehicle is merely travelling or is also operating by spraying, harvesting, seeding or the like. Alternatively, an operator manually enters when operation described above starts and stops.

The guidance devices 100, 102, 104 may further be operable to automatically control equipment such as sprayers or seeders to not spray or seed on predefined exclusion zones, or zones where the vehicle overlaps previously treated area. The guidance devices 100, 102, 104 are operatively connected to the working implements of the vehicles to actuate operation of the working implement or to cease operation of the working implement. This may, for example, be actuation of nozzles of a spray boom to either have the spray boom spray product or not. The guidance devices are thus operable to actuate the working implements to not operate on area previously operated on by another vehicle. This prevents, or at least minimizes, the spraying of the same product by two different vehicles on the same area.

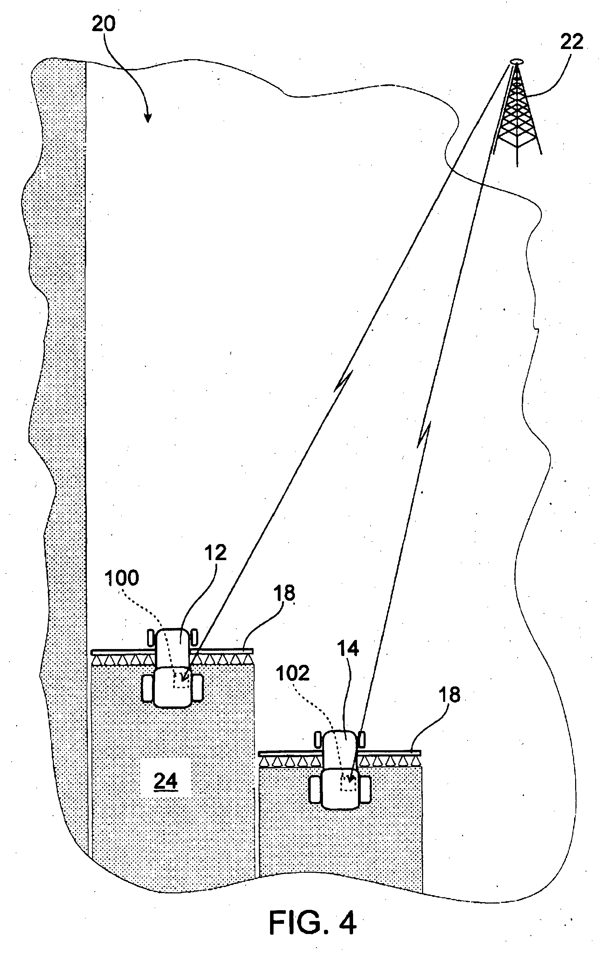

FIG 4 shows a first vehicle 12 and a second vehicle 14 operating in a paddock 20. The vehicles 12, 14 have spray booms 18. The first vehicle 12 has the first guidance device 100 mounted therein and the second vehicle 14 has the second guidance device 102 mounted therein. The wireless communications network 400 described with reference to FIG 1 includes cellular towers 22 as shown in FIG 4. The guidance devices 100, 102 transmit upload guidance data and receive download guidance data via the cellular tower 22. The first guidance device 100 transmits upload guidance data, including coverage data of area 24 covered by the first vehicle 12 while operating in the paddock 20. The second guidance device 102 receives download guidance data which includes coverage data recorded by the first guidance device 100. The second guidance device 102 utilizes the download guidance data to guide the second vehicle 14 to not overlap with the area 24 in the paddock 20 already covered by the first vehicle 12. The second guidance device 102 may also use the download guidance data to turn the nozzles of the spray boom 18 on and off, thereby to avoid overlap of treated area, even if the paths of the vehicles 12, 14 cross.

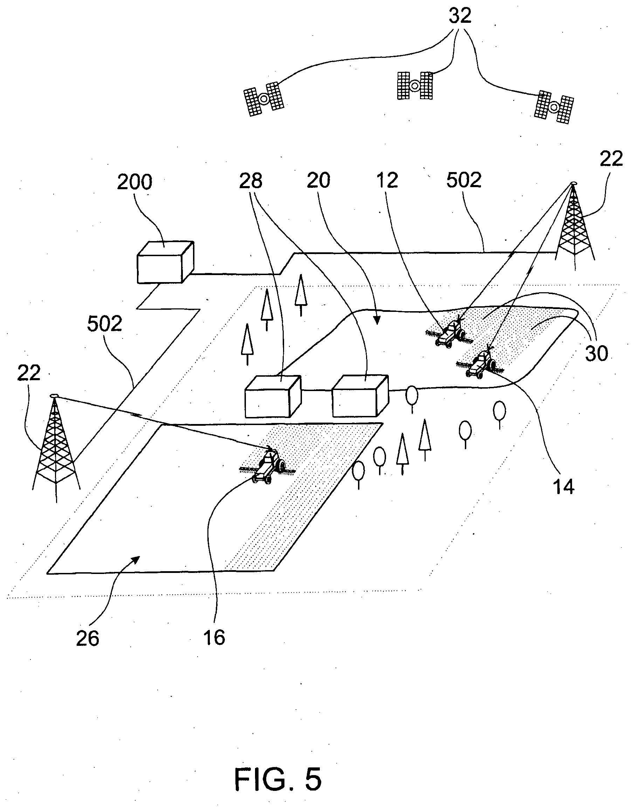

FIG 5 shows another example of vehicles 12, 14, 16 utilizing the system of data sharing in accordance with the invention. The same reference numerals are used in FIG 5 as used in FIG's 1 to 4 for the same features. FIG 5 shows the first vehicle 12 and second vehicle 14 operating in the paddock 20. A third vehicle 16 operates in another paddock 26. Between the paddocks 20 and 26 are buildings 28. Radio communication between the first vehicle 12 and second vehicle 14 may not be possible because of the buildings 28 blocking any radio signal. The third vehicle 16 may also be such a distance away from the other two vehicles 12, 14 that radio communication is not possible. The vehicles 12, 14, 16 are, however, able to share guidance data using the system 10 described hereinabove. The first vehicle 12 and second vehicle 14 have respective first and second guidance devices 100, 102 to transmit upload guidance data and receive download guidance data via one of the cellular towers 22. The third vehicle 16 has the third guidance device 104 to transmit upload guidance data and receive download guidance data via another the cellular tower 22. If the third vehicle 16 was to join the first vehicle 12 and second vehicle 14 in operating in the paddock 20, its guidance device 104 will already have received the necessary download guidance data via the server 200 to avoid the third vehicle 16 from overlapping area 30 already operated on by the first vehicle 12 and second vehicle 14. The same applies if either of the first vehicle 12 and second vehicle 14 is moved to operate in the paddock 26.

The cellular towers 22 are connected to the central server 200 via telecommunications lines 502 of the fixed line telecommunications network 500.

The guidance devices 100, 102, 104 are thus in real time or near real time data sharing communication with each other, irrespective of the type of terrain or distance between the vehicles in which the guidance devices are mounted. Guidance data is shared between the guidance devices via the central server 200. As long as the guidance devices 100, 102, 104 are in wireless communication with the wireless communication network 400, guidance data is shared in real time or near-real time between the guidance devices 100, 102, 104.

FIG 5 further shows GNSS satellites 32 from which position determining signals are transmitted to the positioning modules 130 of the respective guidance devices 100, 102, 104.

Throughout the specification the aim has been to describe the present invention without limiting the invention to any one embodiment or specific collection of features. Persons skilled in the relevant art may realize variations from the specific embodiments that will nonetheless fall within the scope of the present invention.

In this specification, the terms "comprises", "comprising", "includes", "including" or similar terms are intended to mean a non-exclusive inclusion, such that a method, system or apparatus that comprises a list of elements does not include those elements solely, but may well include other elements not listed.

## Claims

1. A system (10) for data sharing between guidance devices (100, 102, 104) of roving agricultural vehicles (12, 14, 16), the system (10) comprising:
a central server (200) having:
a communications module (206) for receiving upload guidance data and for transmitting download guidance data; and
a database (202) for storing the upload guidance data;
a first guidance device (100) of a first agricultural vehicle (12), the first guidance device (100) having a communication module (110) for wireless transmission of upload guidance data to the central server (200), the upload guidance data including coverage data of area covered by the first agricultural vehicle (12) whilst operating; and
a second guidance device (102) of a second agricultural vehicle (14), the second guidance device (102) having a communication module (110) for wireless receipt of download guidance data from the central server (200);
wherein the central server (200) is configured so that at least part of the download guidance data transmitted to the second guidance device (102) comprises data generated by the sever (200) using at least part of the upload guidance data received from the first guidance device (100) stored in the database (202) of the central server (200); and
wherein the central server (200) is configured to receive instructions, directed to one of the first guidance device (100) or the second guidance device (102), and transmit the instructions as download guidance data to the one of the first guidance (100) device or the second guidance device (102).

2. The system (10) of claim 1, wherein each of the first guidance device (100) and the second guidance device (102) includes
a mapping and display module (140), the mapping and display module (140) operable to record and display coverage data of area covered by the agricultural vehicle (12, 14, 16) in which the respective guidance device (100, 102, 104) is located and operable to display coverage data of agricultural vehicles (12, 14, 16) other than the agricultural vehicle (12, 14, 16) in which the guidance device (100, 102, 104) is located, the coverage data of agricultural vehicles (12, 14, 16) other than the agricultural vehicle (12, 14, 16) in which the guidance device (100, 102, 104) is located is received by the guidance device (100, 102, 104) as download guidance data; and/or
a positioning module (130), particularly being in the form of a Global Navigation Satellite System unit, the positioning module (130) configured to track the position of the respective guidance devices (100, 102, 104) to generate position data used in generating the coverage data; in particular wherein each of the first guidance device (100) and the second guidance device (102) includes a vehicle modeling unit (150) to model the footprint of the agricultural vehicle (12, 14, 16) in which the guidance device (100, 102, 104) is located, the first guidance device (100) and second guidance device (102) operable to calculate coverage data using the footprint of the agricultural vehicle (12, 14, 16) in which the guidance device (100, 102, 104) is located and changing position data of the agricultural vehicle (12, 14, 16).

3. A central server (200) which provides data sharing between guidance devices (100, 102, 104) located in roving agricultural vehicles (12, 14, 16), the central server (200) having:
a communications module (206) connected to a wireless communications network (400) for receiving upload guidance data from a first guidance device (100) of a first agricultural vehicle (12) and for transmitting download guidance data to a second guidance device (102) of a second agricultural vehicle (14) via the wireless communications network (400);
a database (202) for storing the upload guidance data including coverage data of an area covered by the first agricultural vehicle (12) while operating; and
wherein the central server (200) is configured so that at least part of the download guidance data transmitted to the second guidance device (102) comprises data generated by the central server (200) using at least part of the coverage data stored in the database (202) of the central server (200); and
wherein the central server (200) is configured to receive instructions, directed to one of the first guidance device (100) or the second guidance device (102), and transmit the instructions as download guidance data to the one of the first guidance device (100) or the second guidance device (102).

4. The central server (200) of claim 3, wherein the central server (200) is configured to be accessible by a personal computer (300) via a network.

5. The central sever (200) of claim 4, wherein the central server (200) is operable to store a digital site map updated by the upload guidance data from the guidance devices (100, 102, 104 and the digital site map is accessible for viewing by the personal computer (300), in particular wherein the upload guidance data includes position data of the first agricultural vehicle (12) and the central server is operable to record the position of the first agricultural vehicle (12) on the digital site map.

6. The central server (200) of claim 5, wherein the central server (200) is adapted to update the digital site map with coverage data of the upload guidance data received from the guidance devices (100, 102, 104).

7. A guidance device (100, 102, 104) for an agricultural vehicle (12, 14, 16), the guidance device (100, 102, 104) including:
a positioning module (130), the positioning module (130) configured to track the position of the agricultural vehicle (12, 14, 16);
a vehicle modeling unit (150) operable to model the footprint of the agricultural vehicle (12, 14, 16) while operating;
a mapping and display module (140), the mapping and display module (140) operable to record coverage data of area covered by the agricultural vehicle (12, 14, 16) while operating, and to store the coverage data of other agricultural vehicles (12,14,16); and
a communication module (110) adapted for wireless transmission of upload guidance data; including coverage data of area covered by the agricultural vehicle (12, 14, 16) while operating, to a central server (200) remote from the agricultural vehicle (12, 14, 16), the communication module (110) adapted to receive download guidance data, including the coverage data of the other agricultural vehicles (12, 14, 16) and instructions directed to the guidance device (100, 102,104), from the central server (200), and the communication module (110) particularly includes a cellular modem for wireless communication with the central server (200).

8. The guidance device (100, 102, 104) of claim 7, wherein the communication module (110) of the guidance device (100, 102, 104) has a unique identifier to uniquely identify the guidance device (100, 102, 104) at the central server (200).

9. The guidance device (100, 102, 104) of claim 7 or 8, wherein the mapping and display module (140) is operable to display coverage data of area covered by the agricultural vehicle (12, 14, 16) in which the guidance device (100, 102, 104) is located and operable to display coverage data of the other agricultural vehicles (12, 14, 16).

10. The guidance device (100, 102, 104) of any one of claims 7 to 9, wherein the mapping and display module (140) is adapted to guide the agricultural vehicle (12, 14, 16) relative to the area covered by the other agricultural vehicles (12, 14, 16), in particular to not overlap with the area covered by the other agricultural vehicles (12, 14,16).

11. The guidance device (100, 102, 104) of any one of claims 7 to 10, wherein the guidance device (100, 102, 104) is operable to automatically control working equipment of the agricultural vehicle (12, 14, 16) to not operate over area already covered by the other agricultural vehicles (12, 14, 16).

12. A method of sharing guidance data between agricultural vehicles (12, 14, 16), the method including:
wirelessly transmitting upload guidance data from a first guidance device (100) of a first agricultural vehicle (12) to a central server (200), the upload guidance data including coverage data of area covered by the first agricultural vehicle (12) while operating;
receiving the upload guidance data at the central server (200);
generating download guidance data at the central server (200) using at least part of the upload guidance data received from the first guidance device (100) and instructions directed to a second guidance device (102);
wirelessly transmitting the download guidance data from the sever (200) to the second guidance device (102) of a second agricultural vehicle (14); and
wirelessly receiving the download guidance data at the second guidance device (102).

13. The method of claim 12, including:
the second guidance device (102) wirelessly transmitting upload guidance data, including coverage data of area covered by the second agricultural vehicle (14) while operating, from the second guidance device (102) to the central server (200); and
the first guidance device (100) wirelessly receiving download guidance data generated by the central server (200) from at least part of the upload guidance data received at the central server (200) from the second guidance device (102); and/or
identifying the first guidance device (100) and the second guidance device (102) at the central server (200) by a unique network addresses of each of the first guidance device (100) and the second guidance device (102).

14. The method of claim 13, including:
modeling the footprint of the first agricultural vehicle (12); and
calculating the coverage data of the first agricultural device (12) while operating using changing position data of the first agricultural vehicle (12) and the footprint of the first agricultural vehicle (12); and/or
storing a digital site map at the central server (200) and updating the digital site map with the upload guidance data.

15. A method of guiding agricultural vehicles (12, 14, 16) to prevent overlap of areas operated on by the agricultural vehicles (12,14, 16), the method including:
sharing guidance data between agricultural vehicles (12,14,16) as claimed in claim 13 or 14; and
guiding the second agricultural vehicle (14) using the download guidance data to not overlap while operating with area covered by the first agricultural vehicle (12) while operating, the guiding the second agricultural vehicle (14) particularly includes controlling working equipment of the agricultural vehicle (14) to not operate over area already covered by first agricultural vehicle (12) when the working equipment travels over the area already covered by the first agricultural vehicle (12).

16. The method of guiding agricultural vehicles (12, 14, 16) of claim 15, wherein the method includes:
displaying coverage data of area covered by the agricultural vehicle (12, 14, 16) in which the respective guidance device (100, 102, 104) is located on a display; and
displaying coverage data of agricultural vehicles (12, 14, 16) other than the agricultural vehicle (12, 14, 16) in which the guidance device (100, 102, 104) is located on the display.

## Patentansprüche

1. System (10) zur gemeinsamen Datennutzung durch Leitvorrichtungen (100, 102, 104) von sich umherbewegenden landwirtschaftlichen Fahrzeugen (12, 14, 16), wobei das System (10) Folgendes aufweist:
einen zentralen Server (200), aufweisend:
ein Kommunikationsmodul (206) zum Empfangen von Upload-Leitdaten und zum Senden von Download-Leitdaten; und
eine Datenbank (202) zum Speichern der Upload-Leitdaten;
eine erste Leitvorrichtung (100) eines ersten landwirtschaftlichen Fahrzeugs (12), wobei die erste Leitvorrichtung (100) ein Kommunikationsmodul (110) zum drahtlosen Senden von Upload-Leitdaten zum zentralen Server (200) aufweist, wobei die Upload-Leitdaten Abdeckungsdaten über den von dem ersten landwirtschaftlichen Fahrzeug (12) während seines Betriebs abgedeckten Bereich beinhalten; und
eine zweite Leitvorrichtung (102) eines zweiten landwirtschaftlichen Fahrzeugs (14), wobei die zweite Leitvorrichtung (102) ein Kommunikationsmodul (110) zum drahtlosen Empfangen von Download-Leitdaten vom zentralen Server (200) aufweist;
wobei der zentrale Server (200) derart konfiguriert ist, dass wenigstens ein Teil der Download-Leitdaten, die an die zweite Leitvorrichtung (102) gesendet werden, Daten umfasst, die von dem Server (200) unter Verwendung wenigstens eines Teils der von der ersten Leitvorrichtung (100) empfangenen Upload-Leitdaten erzeugt werden, die in der Datenbank (202) des zentralen Servers (200) gespeichert sind; und
wobei der zentrale Server (200) dafür konfiguriert ist, an eine von der ersten Leitvorrichtung (100) oder der zweiten Leitvorrichtung (102) gerichtete Anweisungen zu empfangen und die Anweisungen als Download-Leitdaten an die eine von der ersten Leitvorrichtung (100) oder der zweiten Leitvorrichtung (102) zu senden.

2. System (10) nach Anspruch 1, wobei jede von der ersten Leitvorrichtung (100) und der zweiten Leitvorrichtung (102) Folgendes beinhaltet:
ein Zuordnungs- und Anzeigemodul (140), wobei das Zuordnungs- und Anzeigemodul (140) dazu einsetzbar ist, Abdeckungsdaten über den Bereich aufzuzeichnen und anzuzeigen, der von dem landwirtschaftlichen Fahrzeug (12, 14, 16) abgedeckt wird, in dem sich die jeweilige Leitvorrichtung (100, 102, 104) befindet, und wobei es dazu einsetzbar ist, Abdeckungsdaten von landwirtschaftlichen Fahrzeugen (12, 14, 16) anzuzeigen, bei denen es sich um andere handelt als das landwirtschaftliche Fahrzeug (12, 14, 16), in dem sich die Leitvorrichtung (100, 102, 104) befindet, wobei die Abdeckungsdaten von landwirtschaftlichen Fahrzeugen (12, 14, 16), bei denen es sich um andere handelt als das landwirtschaftliche Fahrzeug (12, 14, 16), in dem sich die Leitvorrichtung (100, 102, 104) befindet, von der Leitvorrichtung (100, 102, 104) als Download-Leitdaten empfangen werden; und/oder
ein Positionierungsmodul (130), das insbesondere in Form einer Einheit eines globalen Navigationssatellitensystems vorliegt, wobei das Positionierungsmodul (130) dafür konfiguriert ist, die Position der jeweiligen Leitvorrichtungen (100, 102, 104) zu verfolgen, um Positionsdaten zu erzeugen, die bei der Erzeugung der Abdeckungsdaten verwendet werden; wobei insbesondere jede von der ersten Leitvorrichtung (100) und der zweiten Leitvorrichtung (102) eine Fahrzeugmodelliereinheit (150) beinhaltet, um die Standfläche des landwirtschaftlichen Fahrzeugs (12, 14, 16) zu modellieren, in dem sich die Leitvorrichtung (100, 102, 104) befindet, wobei die erste Leitvorrichtung (100) und die zweite Leitvorrichtung (102) dazu einsetzbar sind, Abdeckungsdaten zu berechnen, wobei die Standfläche des landwirtschaftlichen Fahrzeugs (12, 14, 16), in dem sich die Leitvorrichtung (100, 102, 104) befindet, und sich verändernde Positionsdaten des landwirtschaftlichen Fahrzeugs (12, 14, 16) verwendet werden.

3. Zentraler Server (200), der eine gemeinsame Datennutzung durch Leitvorrichtungen (100, 102, 104) ermöglicht, die sich in sich umherbewegenden landwirtschaftlichen Fahrzeugen (12, 14, 16) befinden, wobei der zentrale Server (200) Folgendes aufweist:
ein Kommunikationsmodul (206), das mit einem Drahtloskommunikationsnetz (400) verbunden ist, um über das Drahtloskommunikationsnetz (400) Upload-Leitdaten von einer ersten Leitvorrichtung (100) eines ersten landwirtschaftlichen Fahrzeugs (12) zu empfangen und Download-Leitdaten an eine zweite Leitvorrichtung (102) eines zweiten landwirtschaftlichen Fahrzeugs (14) zu senden;
eine Datenbank (202) zum Speichern der Upload-Leitdaten, die Abdeckungsdaten über den von dem ersten landwirtschaftlichen Fahrzeug (12) während seines Betriebs abgedeckten Bereich beinhalten; und
wobei der zentrale Server (200) derart konfiguriert ist, dass wenigstens ein Teil der Download-Leitdaten, die an die zweite Leitvorrichtung (102) gesendet werden, Daten umfasst, die von dem Server (200) unter Verwendung wenigstens eines Teils der Abdeckungsdaten erzeugt werden, die in der Datenbank (202) des zentralen Servers (200) gespeichert sind; und
wobei der zentrale Server (200) dafür konfiguriert ist, an eine von der ersten Leitvorrichtung (100) oder der zweiten Leitvorrichtung (102) gerichtete Anweisungen zu empfangen und die Anweisungen als Download-Leitdaten an eine von der ersten Leitvorrichtung (100) oder der zweiten Leitvorrichtung (102) zu senden.

4. Zentraler Server (200) nach Anspruch 3, wobei der zentrale Server (200) dafür konfiguriert ist, für einen Personalcomputer (300) über ein Netzwerk zugänglich zu sein.

5. Zentraler Server (200) nach Anspruch 4, wobei der zentrale Server (200) dazu einsetzbar ist, eine digitale Landkarte zu speichern, die durch die Upload-Leitdaten von den Leitvorrichtungen (100, 102, 104) aktualisiert wird, und wobei die digitale Landkarte für den Personalcomputer (300) zur Ansicht zugänglich ist, wobei die Upload-Leitdaten insbesondere Positionsdaten des ersten landwirtschaftlichen Fahrzeugs (12) beinhalten und der zentrale Server dazu einsetzbar ist, die Position des ersten landwirtschaftlichen Fahrzeugs (12) auf der digitalen Landkarte zu verzeichnen.

6. Zentraler Server (200) nach Anspruch 5, wobei der zentrale Server (200) dafür geeignet ist, die digitale Landkarte durch Abdeckungsdaten der Upload-Leitdaten zu aktualisieren, die von den Leitvorrichtungen (100, 102, 104) empfangen werden.

7. Leitvorrichtung (100, 102, 104) für ein landwirtschaftliches Fahrzeug (12, 14, 16), wobei die Leitvorrichtung (100, 102, 104) Folgendes beinhaltet:
ein Positionierungsmodul (130), wobei das Positionierungsmodul (130) dafür konfiguriert ist, die Position des landwirtschaftlichen Fahrzeugs (12, 14, 16) zu verfolgen;
eine Fahrzeugmodelliereinheit (150), die dazu einsetzbar ist, die Standfläche des landwirtschaftlichen Fahrzeugs (12, 14, 16) während seines Betriebs zu modellieren;
ein Zuordnungs- und Anzeigemodul (140), wobei das Zuordnungs- und Anzeigemodul (140) dazu einsetzbar ist, Abdeckungsdaten über den von dem landwirtschaftlichen Fahrzeug (12, 14, 16) während seines Betriebs abgedeckten Bereich aufzuzeichnen und die Abdeckungsdaten anderer landwirtschaftlichen Fahrzeuge (12, 14, 16) zu speichern; und
ein Kommunikationsmodul (110), das dafür geeignet ist, Upload-Leitdaten, die Abdeckungsdaten über den von dem landwirtschaftlichen Fahrzeug (12, 14, 16) während seines Betriebs abgedeckten Bereich beinhalten, drahtlos an einen zentralen Server (200) zu senden, der von dem landwirtschaftlichen Fahrzeug (12, 14, 16) entfernt ist, wobei das Kommunikationsmodul (110) dafür geeignet ist, Download-Leitdaten, die Abdeckungsdaten der anderen landwirtschaftlichen Fahrzeuge (12, 14, 16) und an die Leitvorrichtung (100, 102, 104) gerichtete Anweisungen beinhalten, vom zentralen Server (200) zu empfangen, und wobei das Kommunikationsmodul (110) insbesondere ein Mobilfunkmodem zur Drahtloskommunikation mit dem zentralen Server (200) beinhaltet.

8. Leitvorrichtung (100, 102, 104) nach Anspruch 7, wobei das Kommunikationsmodul (110) der Leitvorrichtung (100, 102, 104) eine eindeutige Kennung aufweist, um die Leitvorrichtung (100, 102, 104) im zentralen Server (200) eindeutig zu identifizieren.

9. Leitvorrichtung (100, 102, 104) nach Anspruch 7 oder 8, wobei das Zuordnungs- und Anzeigemodul (140) dazu einsetzbar ist, Abdeckungsdaten über einen Bereich anzuzeigen, der von dem landwirtschaftlichen Fahrzeug (12, 14, 16) abgedeckt wird, in dem sich die Leitvorrichtung (100, 102, 104) befindet, und wobei es dazu einsetzbar ist, Abdeckungsdaten der anderen landwirtschaftlichen Fahrzeuge (12, 14, 16) anzuzeigen.

10. Leitvorrichtung (100, 102, 104) nach einem der Ansprüche 7 bis 9, wobei das Zuordnungs- und Anzeigemodul (140) dafür geeignet ist, das landwirtschaftliche Fahrzeug (12, 14, 16) in Bezug auf den von den anderen landwirtschaftlichen Fahrzeugen (12, 14, 16) abgedeckten Bereich zu leiten, so dass insbesondere keine Überlappung mit dem von den anderen landwirtschaftlichen Fahrzeugen (12, 14, 16) abgedeckten Bereich entsteht.

11. Leitvorrichtung (100, 102, 104) nach einem der Ansprüche 7 bis 10, wobei die Leitvorrichtung (100, 102, 104) dazu einsetzbar ist, die Arbeitsgeräte des landwirtschaftlichen Fahrzeugs (12, 14, 16) derart automatisch zu steuern, dass sie in einem bereits von den anderen landwirtschaftlichen Fahrzeugen (12, 14, 16) abgedeckten Bereich nicht betrieben werden.

12. Verfahren zur gemeinsamen Nutzung von Leitdaten durch landwirtschaftliche Fahrzeuge (12, 14, 16), wobei das Verfahren Folgendes beinhaltet:
drahtloses Senden von Upload-Leitdaten von einer ersten Leitvorrichtung (100) eines ersten landwirtschaftlichen Fahrzeugs (12) an einen zentralen Server (200), wobei die Upload-Leitdaten Abdeckungsdaten über den von dem ersten landwirtschaftlichen Fahrzeug (12) während seines Betriebs abgedeckten Bereich beinhalten;
Empfangen der Upload-Leitdaten im zentralen Server (200);
Erzeugen von Download-Leitdaten im zentralen Server (200), wobei wenigstens ein Teil der von der ersten Leitvorrichtung (100) empfangenen Upload-Leitdaten und an eine zweite Leitvorrichtung (102) gerichtete Anweisungen verwendet werden;
drahtloses Senden der Download-Leitdaten vom Server (200) an die zweite Leitvorrichtung (102) eines zweiten landwirtschaftlichen Fahrzeugs (14); und
drahtloses Empfangen der Download-Leitdaten in der zweiten Leitvorrichtung (102).

13. Verfahren nach Anspruch 12, beinhaltend:
durch die zweite Leitvorrichtung (102) erfolgendes drahtloses Senden von Upload-Leitdaten, die Abdeckungsdaten über den von dem zweiten landwirtschaftlichen Fahrzeug (14) während seines Betriebs abgedeckten Bereich beinhalten, von der zweiten Leitvorrichtung (102) an den zentralen Server (200); und
durch die erste Leitvorrichtung (100) erfolgendes drahtloses Empfangen von Download-Leitdaten, die durch den zentralen Server (200) aus wenigstens einem Teil der Upload-Leitdaten erzeugt wurden, die im zentralen Server (200) von der zweiten Leitvorrichtung (102) empfangen wurden; und/oder
Identifizieren der ersten Leitvorrichtung (100) und der zweiten Leitvorrichtung (102) im zentralen Server (200) durch eine eindeutige Netzwerkadresse von jeder von der ersten Leitvorrichtung (100) und der zweiten Leitvorrichtung (102).

14. Verfahren nach Anspruch 13, beinhaltend:
Modellieren der Standfläche des ersten landwirtschaftlichen Fahrzeugs (12); und
Berechnen der Abdeckungsdaten der ersten landwirtschaftlichen Vorrichtung (12) während seines Betriebs unter Verwendung der sich verändernden Positionsdaten des ersten landwirtschaftlichen Fahrzeugs (12) und der Standfläche des ersten landwirtschaftlichen Fahrzeugs (12); und/oder
Speichern einer digitalen Landkarte im zentralen Server (200) und Aktualisieren der digitalen Landkarte durch die Upload-Leitdaten.

15. Verfahren zum Leiten von landwirtschaftlichen Fahrzeugen (12, 14, 16), um eine Überlappung von Bereichen zu verhindern, auf denen die landwirtschaftlichen Fahrzeuge (12,14, 16) betrieben werden, wobei das Verfahren Folgendes beinhaltet:
gemeinsames Nutzen von Leitdaten durch landwirtschaftliche Fahrzeuge (12, 14, 16), wie in Anspruch 13 oder 14 beansprucht; und
Leiten des zweiten landwirtschaftlichen Fahrzeugs (14) unter Verwendung der Download-Leitdaten, so dass während seines Betriebs keine Überlappung mit dem Bereich entsteht, der von dem ersten landwirtschaftlichen Fahrzeug (12) während seines Betriebs abgedeckt wird, wobei das Leiten des zweiten landwirtschaftlichen Fahrzeugs (14) insbesondere das derartige Steuern der Arbeitsgeräte des landwirtschaftlichen Fahrzeugs (14) beinhaltet, dass sie in einem bereits von dem ersten landwirtschaftlichen Fahrzeug (12) abgedeckten Bereich nicht betrieben werden, wenn das Arbeitsgerät über den bereits von dem ersten landwirtschaftlichen Fahrzeug (12) abgedeckten Bereich fährt.

16. Verfahren zum Leiten von landwirtschaftlichen Fahrzeugen (12, 14, 16) nach Anspruch 15, wobei das Verfahren Folgendes beinhaltet:
Anzeigen von Abdeckungsdaten über den Bereich, der von dem landwirtschaftlichen Fahrzeug (12, 14, 16) abgedeckt wird, in dem sich die jeweilige Leitvorrichtung (100, 102, 104) befindet, auf einer Anzeige; und
Anzeigen von Abdeckungsdaten von landwirtschaftlichen Fahrzeugen (12, 14, 16), bei denen es sich um andere handelt als das landwirtschaftliche Fahrzeug (12, 14, 16), in dem sich die Leitvorrichtung (100, 102, 104) befindet, auf der Anzeige.

## Revendications

1. Système (10) de partage de données entre des dispositifs de guidage (100, 102, 104) d'engins agricoles (12, 14, 16) itinérants, ce système (10) comprenant :
un serveur central (200) doté :
d'un module de communication (206) destiné à recevoir des données de guidage téléversées et à transmettre des données de guidage téléchargées, et
d'une base de données (202) destinée à enregistrer les données de guidage téléversées ;
un premier dispositif de guidage (100) d'un premier engin agricole (12), ce premier dispositif de guidage (100) possédant un module de communication (110) pour la transmission sans fil, au serveur central (200), de données de guidage téléversées, ces données de guidage téléversées comprenant des données de couverture de la zone couverte par le premier engin agricole (12) au cours de ses opérations ; et
un second dispositif de guidage (102) d'un second engin agricole (14), ce second dispositif de guidage (102) possédant un module de communication (110) pour la réception sans fil de données de guidage téléchargées en provenance du serveur central (200) ;
le serveur central (200) étant configuré de manière qu'au moins une partie des données de guidage téléchargées transmises au second dispositif de guidage (102) comprennent des données que le serveur (200) a générées en utilisant au moins une partie des données de guidage téléversées reçues du premier dispositif de guidage (100) et enregistrées dans la base de données (202) du serveur central (200), et
le serveur central (200) étant configuré pour recevoir des instructions, destinées à l'un des premier dispositif de guidage (100) et second dispositif de guidage (102), et pour transmettre ces instructions en tant que données de guidage téléchargées audit un des premier dispositif de guidage (100) et second dispositif de guidage (102).

2. Système (10) selon la revendication 1, dans lequel chacun des premier dispositif de guidage (100) et second dispositif de guidage (102) comporte :
un module de cartographie et d'affichage (140) apte à enregistrer et à afficher les données de couverture de la zone couverte par l'engin agricole (12, 14, 16) dans lequel est embarqué le dispositif de guidage (100, 102, 104) respectif et apte à afficher les données de couverture des engins agricoles (12, 14, 16) différents de cet engin agricole (12, 14, 16) dans lequel est embarqué le dispositif de guidage (100, 102, 104), ces données de couverture des engins agricoles (12, 14, 16) différents de l'engin agricole (12, 14, 16) dans lequel est embarqué le dispositif de guidage (100, 102, 104) étant reçues par le dispositif de guidage (100, 102, 104) en tant que données de guidage téléchargées ; et/ou
un module de positionnement (130), notamment sous la forme d'une unité à système de positionnement par satellites, ce module de positionnement (130) étant configuré pour suivre la position des dispositifs de guidage (100, 102, 104) respectifs afin de générer les données de position servant à générer les données de couverture ; notamment dans lequel chacun des premier dispositif de guidage (100) et second dispositif de guidage (102) comporte une unité de modélisation d'engin (150) afin de modéliser l'empreinte de l'engin agricole (12, 14, 16) dans lequel est embarqué le dispositif de guidage (100, 102, 104), le premier dispositif de guidage (100) et le second dispositif de guidage (102) étant aptes à calculer les données de couverture en utilisant l'empreinte de l'engin agricole (12, 14, 16) dans lequel est embarqué le dispositif de guidage (100, 102, 104) et le changement des données de position de premier l'engin agricole (12, 14, 16).

3. Serveur central (200) pour le partage de données entre des dispositifs de guidage (100, 102, 104) embarqués dans des engins agricoles (12, 14, 16) itinérants, ce serveur central (200) comprenant :
un module de communication (206) connecté à un réseau de communication sans fil (400) afin de recevoir des données de guidage téléversées en provenance d'un premier dispositif de guidage (100) d'un premier engin agricole (12) et de transmettre des données de guidage téléchargées à un second dispositif de guidage (102) d'un second engin agricole (14) au moyen du réseau de communication sans fil (400), et
une base de données (202) destinée à enregistrer les données de guidage téléversées comprenant des données de couverture de la zone couverte par le premier engin agricole (12) au cours de ses opérations ; et
le serveur central (200) étant configuré de manière qu'au moins une partie des données de guidage téléchargées transmises au second dispositif de guidage (102) comprennent des données que le serveur (200) a générées en utilisant au moins une partie des données de couverture enregistrées dans la base de données (202) du serveur central (200), et
le serveur central (200) étant configuré pour recevoir des instructions, destinées à l'un des premier dispositif de guidage (100) et second dispositif de guidage (102), et pour transmettre ces instructions en tant que données de guidage téléchargées audit un des premier dispositif de guidage (100) et second dispositif de guidage (102).

4. Serveur central (200) selon la revendication 3, configuré pour être accessible par un ordinateur personnel (300) au moyen d'un réseau.

5. Serveur central (200) selon la revendication 4, apte à enregistrer une carte numérique actualisée par les données de guidage téléversées en provenance des dispositifs de guidage (100, 102, 104), cette carte numérique étant accessible en visualisation par un ordinateur personnel (300), notamment dans lequel les données de guidage téléversées comportent des données de position du premier engin agricole (12) et le serveur central (200) peut enregistrer la position du premier engin agricole (12) sur la carte numérique.

6. Serveur central (200) selon la revendication 5, ledit serveur central (200) étant adapté afin d'actualiser la carte numérique avec les données de couverture des données de guidage téléversées reçues des dispositifs de guidage (100, 102, 104).

7. Dispositif de guidage (100, 102, 104) pour un engin agricole (12, 14, 16), ledit dispositif de guidage (100, 102, 104) comportant :
un module de positionnement (130) configuré pour suivre la position de l'engin agricole (12, 14, 16) ;
une unité de modélisation d'engin (150) apte à modéliser l'empreinte de l'engin agricole (12, 14, 16) au cours de ses opérations ;
un module de cartographie et d'affichage (140) apte à enregistrer des données de couverture de la zone couverte par l'engin agricole (12, 14, 16) au cours de ses opérations, et à enregistrer les données de couverture d'autres engins agricoles (12, 14, 16) ; et
un module de communication (110) adapté afin de transmettre sans fil des données de guidage téléversées, y compris des données de couverture de la zone couverte par l'engin agricole (12, 14, 16) au cours de ses opérations, à un serveur central (200) distant de l'engin agricole (12, 14, 16), ce module de communication (110) étant adapté afin de recevoir des données de guidage téléchargées, y compris les données de couverture des autres engins agricoles (12, 14, 16) et des instructions destinées au dispositif de guidage (100, 102, 104), en provenance du serveur central (200), le module de communication (110) comprenant notamment un modem cellulaire pour une communication sans fil avec le serveur central (200).

8. Dispositif de guidage (100, 102, 104) selon la revendication 7, dont le module de communication (110) possède un identifiant unique afin d'identifier le dispositif de guidage (100, 102, 104) de manière unique auprès du serveur central (200).

9. Dispositif de guidage (100, 102, 104) selon la revendication 7 ou 8, dans lequel le module de cartographie et d'affichage (140) est apte à afficher les données de couverture de la zone couverte par l'engin agricole (12, 14, 16) dans lequel est embarqué le dispositif de guidage (100, 102, 104) et à afficher les données de couverture des autres engins agricoles (12, 14, 16).

10. Dispositif de guidage (100, 102, 104) selon l'une quelconque des revendications 7 à 9, dans lequel le module de cartographie et d'affichage (140) est adapté afin de guider l'engin agricole (12, 14, 16) par rapport à la zone couverte par les autres engins agricoles (12, 14, 16), notamment de manière à ne pas empiéter sur la zone couverte par les autres engins agricoles (12, 14, 16).

11. Dispositif de guidage (100, 102, 104) selon l'une quelconque des revendications 7 à 10, apte à commander automatiquement le matériel de travail de l'engin agricole (12, 14, 16) de manière à ne pas opérer sur la zone déjà couverte par les autres engins agricoles (12, 14, 16).

12. Procédé de partage de données de guidage entre des engins agricoles (12, 14, 16), comprenant :
la transmission sans fil, à un serveur central (200), de données de guidage téléversées en provenance d'un premier dispositif de guidage (100) d'un premier engin agricole (12), ces données de guidage téléversées comprenant des données de couverture de la zone couverte par le premier engin agricole (12) au cours de ses opérations ;
la réception par le serveur central (200) des données de guidage téléversées ;
la génération, par le serveur central (200), de données de guidage téléchargées, au moyen d'au moins une partie des données de guidage téléversées reçues du premier dispositif de guidage (100) et des instructions destinées à un second dispositif de guidage (102) ;
la transmission sans fil des données de guidage téléchargées, par le serveur central (200) et vers le second dispositif de guidage (102) d'un second engin agricole (14) ; et
la réception sans fil, par le second dispositif de guidage (102), des données de guidage téléchargées.

13. Procédé selon la revendication 12, comprenant :
la transmission sans fil, par le second dispositif de guidage (102), des données de guidage téléversées, y compris les données de couverture de la zone couverte par le second engin agricole (14) au cours de ses opérations, en provenance du second dispositif de guidage (102) et à destination du serveur central (200) ; et
la réception sans fil, par le premier dispositif de guidage (100), de données de guidage téléchargées générées par le serveur central (200) à partir d'au moins une partie des données de guidage téléversées reçues par le serveur central (200) en provenance du second dispositif de guidage (102) ; et/ou l'identification, par le serveur central (200), du premier dispositif de guidage (100) et du second dispositif de guidage (102) au moyen d'une adresse réseau unique pour chacun desdits premier dispositif de guidage (100) et second dispositif de guidage (102).

14. Procédé selon la revendication 13, comprenant :
la modélisation de l'empreinte du premier engin agricole (12) ; et
le calcul des données de couverture du premier engin agricole (12) au cours de ses opérations, au moyen du changement des données de position de premier l'engin agricole (12) et de l'empreinte du premier engin agricole (12) ; et/ou
l'enregistrement d'une carte numérique par le serveur central (200) et l'actualisation de cette carte numérique avec les données de guidage téléversées.

15. Procédé de guidage d'engins agricoles (12, 14, 16) destiné à prévenir l'empiètement sur les zones traitées par les engins agricoles (12, 14, 16), comprenant :
le partage de données de guidage entre engins agricoles (12, 14, 16) selon la revendication 13 ou 14, et
le guidage du second engin agricole (14) au moyen des données de guidage téléchargées afin de ne pas empiéter, en cours d'opérations, sur la zone couverte par le premier engin agricole (12) au cours de ses opérations, le guidage du second engin agricole (14) comprenant notamment la commande du matériel de travail de l'engin agricole (14) afin de ne pas opérer sur la zone déjà couverte par le premier engin agricole (12) lorsque le matériel de travail circule dans cette zone déjà couverte par le premier engin agricole (12).

16. Procédé de guidage d'engins agricoles (12, 14, 16) selon la revendication 15, comprenant :
l'affichage, sur un écran, des données de couverture de la zone couverte par l'engin agricole (12, 14, 16) dans lequel est embarqué le dispositif de guidage (100, 102, 104) respectif, et
l'affichage, sur l'écran, des données de couverture des autres engins agricoles (12, 14, 16) différents de l'engin agricole (12, 14, 16) dans lequel est embarqué le dispositif de guidage (100, 102, 104).
